# EUROPÄISCHE PATENTSCHRIFT

(11) **EP 1 375 080 B1**
(45) Veröffentlichungstag und Bekanntmachung des Hinweises auf die Patenterteilung: **28.04.2010**
(21) Anmeldenummer: 03006698.9
(22) Anmeldetag: 26.03.2003
(51) Int. Cl.: B25F 5/00

(54) **Werkzeugmaschine mit einer Blockiereinrichtung zum Blockieren ihrer Antriebswelle**
Machine-tool having a locking mechanism to lock it's drive shaft
Machine-outil avec un mécanisme de blocage pour bloquer son arbre d'entraînement

(30) Priorität: 22.06.2002 DE 10227983
(43) Veröffentlichungstag der Anmeldung: 02.01.2004
(73) Patentinhaber: Festool GmbH, 73240 Wendlingen (DE)
(72) Erfinder: Manz, Bernhard, 70771 Leinfelden-Echterdingen (DE); Stark, Markus, 73272 Neidlingen (DE)
(74) Vertreter: Bregenzer, Michael

(56) Entgegenhaltungen:
- DE-A1- 4 128 651
- DE-A1- 4 239 559
- DE-A1- 19 753 304
- US-A- 4 448 098
- US-A- 4 696 208
- US-A- 4 754 669
- US-A- 5 576 501
- US-A- 6 098 500
- US-A1- 2002 020 264

## Beschreibung

Die Erfindung betrifft eine Werkzeugmaschine, insbesondere Handwerkzeugmaschine, gemäß dem Oberbegriff des Anspruchs 1, wie aus Dokument EP1166973A1 bekannt.

Solche Blockiereinrichtungen sind in vielfältiger Weise bekannt. Mit ihnen wird die Antriebswelle beim Wechsel des Bearbeitungswerkzeugs festgehalten, so dass sie sich beispielsweise beim Lösen der Befestigungsschraube oder Befestigungsmutter nicht mitdrehen kann.

Aus US 4,448,098 geht ein elektrisch angetriebener Schrauber hervor, der einen Ratschenmechanismus aufweist. Der Ratschenmechanismus hat ein Schnellspannfutter für Schrauberbits sowie einen Motor zum Antreiben des Futters. Beim Überschreiten einer Drehmomentschwelle entkoppelt ein Getriebe den Motor von einer Abtriebswelle. Im Anschluß an diese Prozedur kann in einem abschließenden Schritt des Anziehens ein Handgriffteil des Schraubers manuell ergriffen werden und der Schrauberbit mittels des Ratschenmechanismuses vollständig angezogen werden.

Ein derartiges Ratschengetriebe für einen elektrischen Schrauber ist ferner aus US 5,576,501 bekannt.

Aus US 4,696,208 geht ein Werkzeugfutter mit einer Überwurfmutter und Spannbacken hervor.

US 2002/0020264 A1 betrifft ein Elektrowerkzeug mit einer Bremsvorrichtung zum Abbremsen des Werkzeugs. Durch ein Sicherungselement wird eine Fehlmanipulation des Elektrowerkzeugs verhindert, wobei das Sicherungselement in einer Sicherungsposition ein Anschalten des Motors verhindert und die Bremsvorrichtung zudem aktiviert.

Ist zum Lösen oder Festziehen der Befestigungsschraube oder Befestigungsmutter bei einer Werkzeugmaschine der eingangs genannten Art ein verhältnismäßig langer Verdrehweg erforderlich, muss das Drehwerkzeug mehrmals an der Befestigungsschraube oder Befestigungsmutter umgesetzt werden, falls für ein vollständiges Verschwenken des Drehwerkzeugs im Kreis herum nicht genügend Platz zur Verfügung steht. Dies ist umständlich.

Der vorliegenden Erfindung liegt deshalb die Aufgabe zugrunde, eine Werkzeugmaschine der eingangs genannten Art zu schaffen, bei der das Lösen und/oder Festziehen der Befestigungsschraube oder Befestigungsmutter gegenüber den seitherigen Konstruktionen erleichtert ist.

Diese Aufgabe wird erfindungsgemäß dadurch gelöst, dass die Blockiereinrichtung ein drehfest mit der Antriebswelle verbundenes Blockier-Zahnrad und einen dem Blockier-Zahnrad zugeordneten, um eine ortsfest an der Werkzeugmaschine angeordnete Schwenkachse schwenkbaren, von Hand betätigbaren Klinkenhebel enthält, wobei der Klinkenhebel einarmig oder zweiarmig ist und durch Federkraft in einer außer Eingriff mit dem Blockier-Zahnrad stehenden Ausgangsstellung gehalten wird und entgegen der Federkraft bei einarmigem Klinkenhebel in eine Blockierstellung und bei zweiarmigem Klinkenhebel in zwei einander entgegengesetzte Blockierstellungen verschwenkbar ist, wobei das Blockier-Zahnrad in jeder Blockierstellung gegen ein Verdrehen entweder in dem Lösen oder Festziehen der Befestigungsschraube oder Befestigungsmutter entsprechender Drehrichtung blockiert ist und in entgegengesetzter Drehrichtung an dem Klinkenhebel vorbeiratschen kann und wobei zwischen der Befestigungsschraube oder Befestigungsmutter und der Antriebswelle eine Reibungskraft wirksam ist, so dass die Antriebswelle beim Verdrehen der Befestigungsschraube oder Befestigungsmutter in der blockierten Drehrichtung entgegengesetzter Drehrichtung mitgenommen wird.

Auf diese Weise muss das Drehwerkzeug beim Lösen und/oder Festziehen an der Befestigungsschraube oder Befestigungsmutter nicht umgesetzt werden, und zwar unabhängig davon, wie lang der für das Lösen und/oder Festziehen erforderliche Drehweg der Befestigungsschraube oder Befestigungsmutter ist. Hat man das Drehwerkzeug unter Verdrehen der Befestigungsschraube oder Befestigungsmutter um einen für den Benutzer bequemen Winkel verschwenkt, wird es unter Verbleib an der Befestigungsschraube oder Befestigungsmutter einfach zurückgeschwenkt, wonach das Lösen und/oder Festziehen durch eine erneute Richtungsumkehr der Schwenkbewegung fortgesetzt wird.

Die erfindungsgemäße Blockiereinrichtung ist bei solchen Werkzeugmaschinen besonders vorteilhaft, die eine Spannzange zur Aufnahme des Bearbeitungswerkzeugs aufweisen und bei denen die Befestigungsmutter eine die Spannzange übergreifende Überwurfmutter ist, so dass beim Festziehen der Überwurfmutter diese die Spannzange gegen das Bearbeitungswerkzeug spannt. Das Gewinde einer derartigen Überwurfmutter weist eine verhältnismäßig kleine Steigung auf, so dass zum Lösen und/oder Festziehen der Verspannung mehrere Umdrehungen erforderlich sind.

Weitere zweckmäßige Ausgestaltungen der Erfindung sind in den Unteransprüchen angegeben.

Nachstehend wird ein Ausführungsbeispiel der Erfindung anhand der Zeichnung erläutert. Es zeigen:
- Fig. 1: eine Oberfräse im Vertikalschnitt in Teildarstellung, wobei nur der den Endbereich der Antriebswelle mit zugeordneter Spannzange zur Aufnahme eines Fräswerkzeugs und eine erfindungsgemäße Blockiereinrichtung enthaltende Bereich dargestellt ist,
- Fig. 2: Die Anordnung nach Fig. 1 im Querschnitt gemäß der Schnittlinie II-II,
- Fig. 3: die Anordnung nach Fig. 1 im Querschnitt gemäß der Schnittlinie III-III,
- Fig. 4: die schematische Darstellung einer Sicherungseinrichtung der Handwerkzeugmaschine, mit der eine Betätigung der Blockiereinrichtung bei eingeschalteter Maschine sowie ein Einschalten der Maschine bei blockierter Antriebswelle verhindert wird, in dem Pfeil IV in Fig. 1 entsprechender Blickrichtung, wobei aus Fig. IV die sich bei eingeschalteter Maschine und unwirksamer Blockiereinrichtung ergebende Situation hervorgeht,
- Fig. 5: die Anordnung nach Fig. 4, wobei die Handwerkzeugmaschine jedoch ausgeschaltet und die Antriebswelle blockiert ist.

Bei der aus der Zeichnung bereichsweise hervorgehenden Werkzeugmaschine handelt es sich um eine von Hand über das Werkstück zu führende Oberfräse, die mit Ausnahme der erfindungsgemäßen Blockiereinrichtung und zugehöriger Sicherungseinrichtung einen üblichen Aufbau aufweist, so dass sich eine Beschreibung der sonstigen Konstruktion der Oberfräse erübrigt.

Die Oberfräse weist eine beim Betrieb um eine Rotationsachse 1 rotierende Antriebswelle 2 auf, die von einem nicht dargestellten Antriebsmotor her angetrieben wird. Am aus dem Maschinengehäuse 3 ragenden Endbereich der Antriebswelle 2 ist ein Innenkonus 4 ausgebildet. In den Endbereich der Antriebswelle 2 ist eine Spannzange 5 eingesetzt, die einen dem Innenkonus 4 entsprechenden Außenkonus 6 bildet. Die Spannzange 5 weist axial gerichtete Schlitze 7 auf, durch die die Spannzangenwandung in durch die Schlitze voneinander getrennte, leistenartig längliche Klemmbacken unterteilt wird.

Am aus der Antriebswelle 2 vorstehenden Ende der Spannzange 5 ist am Außenumfang eine umlaufende, sich zum Spannzangenende hin verjüngende Kegelfläche 9 ausgebildet, die mit einer entsprechenden Kegelfläche 10 zusammenwirkt, die am Innenumfang einer als Überwurfmutter ausgebildeten Befestigungsmutter 11 angeordnet ist. Die Befestigungsmutter 11 weist an ihrem der Kegelfläche 10 entgegengesetzten Bereich 12 ein Innengewinde 13 auf, mit dem sie auf ein Außengewinde 14 an der Antriebswelle 2 aufgeschraubt ist. Beim Verdrehen der Befestigungsmutter 11 im Sinne eines Aufschraubens wird die Kegelfläche 10 der Befestigungsmutter 11 gegen die Kegelfläche 9 der Spannzange 5 gedrückt, so dass auf die Klemmbacken 8 eine Kraft in radialer Richtung einwirkt und ein mit seinem Schaft in die Spannzange 5 eingestecktes, zur Werkstückbearbeitung bestimmtes Fräswerkzeug festgespannt wird.

Die Befestigungsmutter 11 liegt frei, so dass sie von außen her zugänglich ist und mittels eines Drehwerkzeugs verdreht werden kann. Das Drehwerkzeug kann beispielsweise ein Mehrkant-Schraubenschlüssel sein, der an eine entsprechend mehrkantige Außenumfangsfläche der Befestigungsmutter 11 angesetzt wird. Beim Verdrehen in die eine Richtung wird die Befestigungsmutter 11 unter festem Verspannen des Bearbeitungswerkzeugs festgezogen. Will man das Bearbeitungswerkzeug entfernen, muss die Befestigungsmutter 11 in entgegengesetzter Richtung verdreht werden, so dass die Verspannung gelöst wird.

Insbesondere beim Lösen der Schraubverbindung zwischen der Befestigungsmutter 11 und der Antriebswelle 2 ist es erforderlich, dass die Antriebswelle 2 festgehalten wird. Wäre dies anders, würde sich die Antriebswelle 2 beim Verdrehen der Befestigungsmutter 11 mitdrehen, so dass die Schraubverbindung unverändert bestehen bleiben würde.

Daher ist der Antriebswelle 2 eine Blockiereinrichtung 16 zugeordnet, mit der die Antriebswelle 2 blockiert werden kann. Dieses Blockieren kann wahlweise in der einen oder anderen Drehrichtung erfolgen, so dass man die Antriebswelle auch beim Festziehen der Befestigungsmutter 11 festhalten kann.

Die Blockiereinrichtung 16 enthält ein drehfest mit der Antriebswelle 2 verbundenes, koaxial zur Antriebswelle 2 angeordnetes Blockier-Zahnrad 17, das beim Ausführungsbeispiel eine umlaufende Außenverzahnung 18 aufweist. Das Blockier-Zahnrad 17 kann innerhalb des Maschinengehäuses 3 angeordnet sein. Dem Blockier-Zahnrad 17 ist ein von Hand von außen her betätigbarer Klinkenhebel 19 zugeordnet, der um eine ortsfest an der Werkzeugmaschine angeordnete, parallel zur Antriebswelle 2 verlaufende Schwenkachse 20 schwenkbar ist. Beim zweckmäßigen Ausführungsbeispiel handelt es sich bei dem Klinkenhebel 19 um einen zweiarmigen Hebel, der in Umfangsrichtung des Zahnrads 17 gesehen beiderseits der Schwenkachse 20 jeweils einen Hebelarm 21 bzw. 22 bildet. Jeder Hebelarm 21,22 weist an seiner dem Zahnrad 27 zugewandten Seite eine von mindestens einem Zahn oder einer Zahnlücke gebildete Verzahnungseinrichtung 23 bzw. 24 auf, die der Verzahnung 18 des Zahnrades 17 zugeordnet ist.

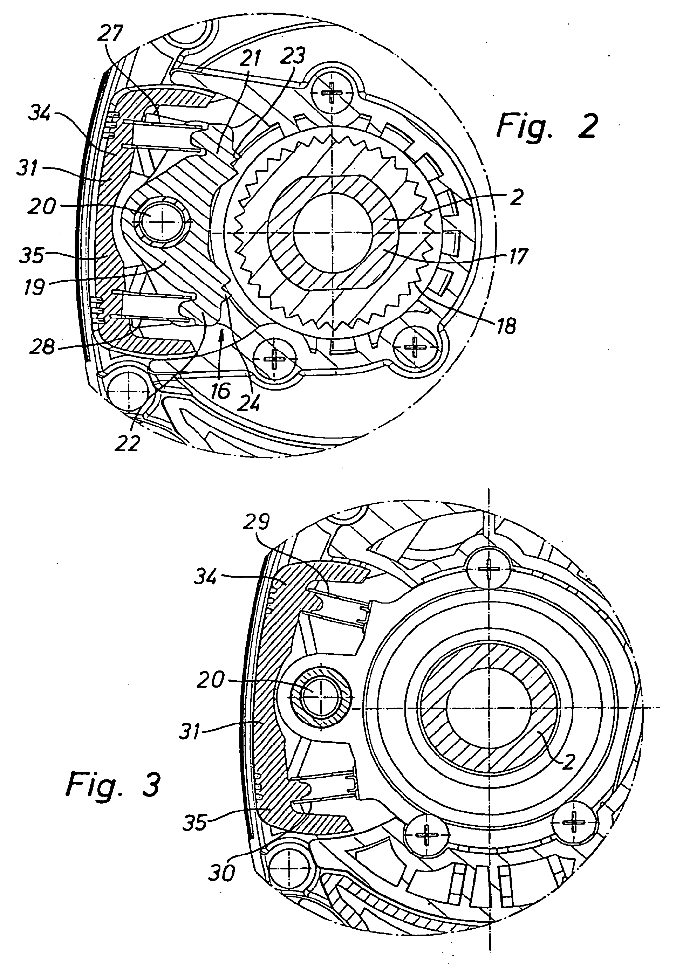

In Fig. 2 befindet sich der Klinkenhebel 19 in seiner Ausgangsstellung, in der die beiden Verzahnungseinrichtungen 23,24 dem Zahnrad 17 mit Abstand gegenüberliegen, so dass der Klinkenhebel 19 außer Eingriff mit dem Blockier-Zahnrad 17 steht.
Der Klinkenhebel 19 wird durch Federkraft in dieser Ausgangsstellung gehalten.

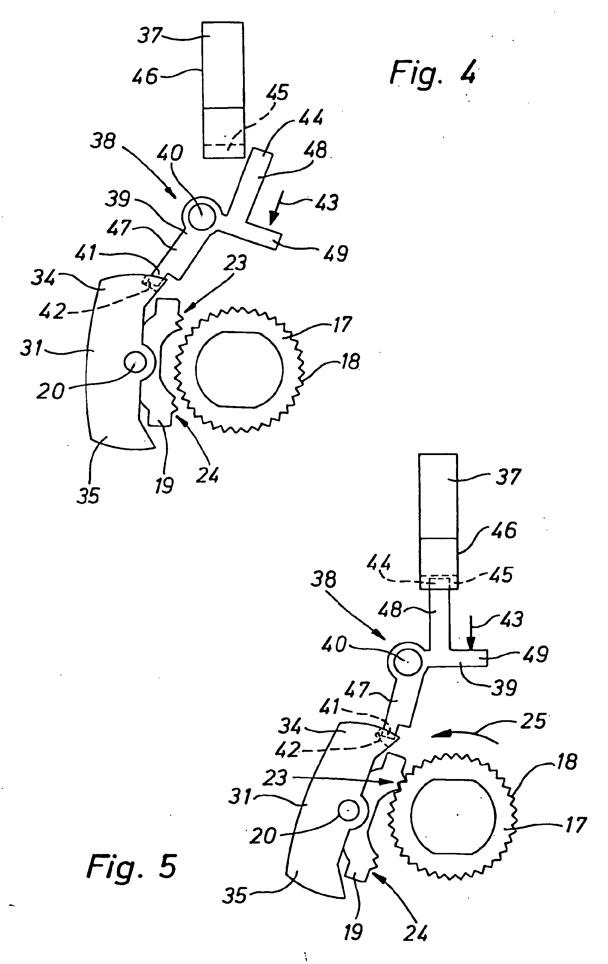

Aus der genannten Ausgangsstellung lässt sich der Klinkenhebel 19 entgegen der Federkraft in die eine oder andere Richtung verschwenken, so dass er in zwei einander entgegengesetzte Blockierstellungen verschwenkt werden kann, in denen entweder die eine Verzahnungseinrichtung 23 oder die andere Verzahnungseinrichtung 24 mit dem Zahnrad 17 in Verzahnungseingriff steht (in Fig. 5 greift die Verzahnungseinrichtung 23 in die Zahnrad-Verzahnung 18 ein). In jeder Blockierstellung ist das Zahnrad 18 gegen ein Verdrehen in der entsprechenden Drehrichtung blockiert, die von außen her gegen die betreffende Verzahnungseinrichtung 23,24 gerichtet ist. Im Falle der Fig. 5 ist das Zahnrad 17 gegen ein Verdrehen in Richtung gemäß Pfeil 25 gesichert. In entgegengesetzter Richtung kann das Zahnrad 17 dagegen an der mit ihm in Eingriff stehenden Verzahnungseinrichtung, im Falle der Fig. 5 die Verzahnungseinrichtung 23, vorbeiratschen. Bei diesem Vorbeiratschen rutscht der Klinkenhebel mit seiner betreffenden Verzahnungseinrichtung über das Zahnrad 17 und führt dabei eine der Verzahnung 18 entsprechende, hin und her gehende Schwenkbewegung aus.

Somit kann die drehfest mit dem Zahnrad 17 verbundene Antriebswelle 2 wahlweise in beiden Drehrichtungen blockiert werden, je nach dem, in welche Richtung man den Klinkenhebel 19 verschwenkt. Somit ist es im Falle des Ausführungsbeispiels mit dem zweiarmigen Klinkenhebel 19 möglich, die Antriebswelle 2 sowohl beim Lösen als auch beim Festziehen der Befestigungsmutter 11 zu blockieren.

Zwischen der Befestigungsmutter 11 und der Antriebswelle 2 ist eine Reibungskraft wirksam, so dass die Antriebswelle 2 beim Verdrehen der Befestigungsmutter 11 mittels des Drehwerkzeugs in der der blockierten Drehrichtung entgegengesetzten Drehrichtung mitgenommen wird. Dies wird beim Ausführungsbeispiel dadurch erreicht, dass zwischen der Befestigungsmutter 11 und der Spannzange 5 ein Mitnahme-Reibring 26 angeordnet ist. Anstelle der Spannzange 5 könnte der Reibring auch an einem anderen drehfest mit der Antriebswelle 2 verbundenen Teil oder unmittelbar an der Antriebswelle 2 angreifen.

Somit ist es beispielsweise zum Lösen der Befestigungsmutter 11 möglich, die Befestigungsmutter 11 bei blockierter Antriebswelle 2 in Löserichtung ein Stück weit zu verdrehen, die z.B. dem Pfeil 25 in Fig. 5 entspricht, wonach man die Befestigungsmutter 11 bei angesetzt bleibendem Drehwerkzeug unter Mitnahme der Antriebswelle 2 zurückdreht (hierbei ratscht das Zahnrad 17 an der betreffenden Verzahnungseinrichtung 23 vorbei). Anschließend kann dann die Befestigungsmutter 11 erneut bei blockierter Antriebswelle 2 in Löserichtung gedreht werden.

Zweckmäßigerweise ist der Klinkenhebel 19 mittels einer ersten Federeinrichtung 27,28 (siehe Fig. 2) federnd an einem um die Schwenkachse 20 schwenkbaren Betätigungselement 31 abgestützt, das seinerseits mittels einer zweiten Federeinrichtung 29, 30 (siehe Fig. 3) federnd gegen das Maschinengehäuse 3, beim Ausführungsbeispiel gegen einen Lagerflansch 32 eines der Antriebswelle 2 zugeordneten Lagers 33, abgestützt ist. Die zweite Federeinrichtung 29,30 hält das Betätigungselement 31 und mit diesem den Klinkenhebel 19 in der Ausgangsstellung. Wird das Betätigungselement 31 vom Benutzer in die eine oder andere Richtung verschwenkt, was entgegen der Kraft der zweiten Federeinrichtung 29,30 erfolgt, wird der Klinkenhebel 19 über die erste Federeinrichtung 27,28 mitgenommen. In der jeweiligen Blockierstellung, die durch Drücken gegen die betreffende Seite des Betätigungselementes 31 erreicht wird, ist das Betätigungselement 31 relativ zum Klinkenhebel 19 weiter verschwenkt.

Da der Klinkenhebel 19 vom Benutzer nicht unmittelbar sondern mittelbar über das Betätigungselement 31 betätigt wird und da zwischen den Klinkenhebel 19 und das Betätigungselement 31 die erste Federeinrichtung 27,28 zwischengeschaltet ist, wirkt sich das Hin- und Herschwenken des Klinkenhebels 19 beim Vorbeiratschen des Zahnrads 17 nicht auf die Hand des Benutzers aus.

Das Betätigungselement 31 ist nach Art einer auf der Schwenkachse 20 sitzenden Wippe mit zwei jeweils einem Arm 21 bzw. 22 des Klinkenhebels 19 zugeordneten Wippenarmen 34,35 ausgebildet. Dabei kann das Betätigungselement 31 eine an der dem Blockier-Zahnrad 17 zugewandten Seite offene Ausnehmung 36 aufweisen, in die der Klinkenhebel 19 eintaucht.

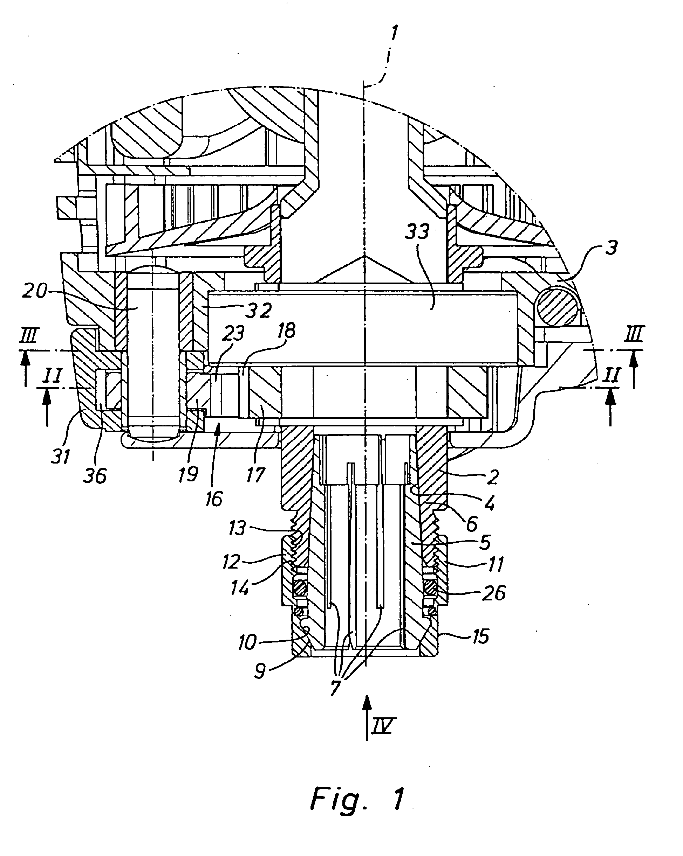

Die erste Federeinrichtung und die zweite Federeinrichtung werden zweckmäßigerweise jeweils von zwei beiderseits der Schwenkachse 20 angeordneten Federn 27,28 bzw. 29,30 gebildet. Wie aus den Fig. 1 bis 3 hervorgeht, sind die beiden Federeinrichtungen 27,28 und 29,30 in axialer Richtung der Antriebswelle 2 versetzt zueinander angeordnet.

Die beschriebene Blockiereinrichtung kann nicht nur bei Oberfräsen sondern auch bei anderen Werkzeugmaschinen, insbesondere bei Handwerkzeugmaschinen verwendet werden, bei denen die Antriebswelle beim Wechsel des für die Bearbeitung des Werkstücks gedachten Bearbeitungswerkzeugs blockiert werden muss. Ferner könnte die Befestigung des Bearbeitungswerkzeugs anstelle mit einer Befestigungsmutter auch mit einer Befestigungsschraube erfolgen, wie es beispielsweise bei Kreissägen der Fall ist.

Eine weitere Abwandlung besteht darin, dass man anstelle eines zweiarmigen Klinkenhebels nur einen einarmigen Klinkenhebel einsetzt. In diesem Falle liegt also nur sozusagen die Hälfte der dargestellten Blockiereinrichtung vor. Ein solcher Klinkenhebel kann nur in eine Blockierstellung verschwenkt werden. Dabei kann die blockierte Drehrichtung der Antriebswelle der Löseoder der Festziehrichtung der Befestigungsmutter oder Befestigungsschraube entsprechen, je nach dem, ob man die Antriebswelle beim Lösen oder Festziehen blockieren will.

Bei der dargestellten Maschine ist ferner noch eine aus den Fig. 4 und 5 schematisch hervorgehende Sicherungseinrichtung vorhanden, die in zweierlei Hinsicht Sicherheit schafft:
Dabei wird vorab darauf hingewiesen, dass die Werkzeugmaschine einen mit der Hand betätigbaren Handschalter 37 zum Ein- und Ausschalten ihres Antriebsmotors aufweist. Dabei ist der Handschalter 37 beim Ausführungsbeispiel ein in lineaerer Richtung im wesentlichen parallel zur Schwenkachse 20, in den Fig. 4 und 5 also senkrecht zur Zeichenebene, bewegbarer Druckschalter.

Die genannte Sicherungseinrichtung 38 verhindert zum einen, dass bei in die Blockierstellung verschwenktem Klinkenhebel 19 (Fig. 5), in der die blockierte Drehrichtung 25 der Rotationsrichtung des Bearbeitungswerkzeugs entspricht, der Handschalter 37 aus seiner die Maschine im Ausschaltzustand haltenden Ausschaltlage in die die Maschine einschaltende Einschaltlage bewegt werden kann.

Zum anderen verhindert die Sicherungseinrichtung 38, dass der Klinkenhebel aus seiner Eingangslage in die Blockierstellung verschwenkt werden kann, wenn der Handschalter 37 in seine Einschaltlage bewegt und somit die Werkzeugmaschine eingeschaltet worden ist.

Im einzelnen enthält die Sicherungseinrichtung 38 beim Ausführungsbeispiel ein Schwenkelement 39, das um eine ortsfest am Maschinengehäuse 3 angeordnete, zur Schwenkachse 20 des Klinkenhebels 19 parallele Anlenkachse 40 schwenkbar ist.

Das Schwenkelement 39 weist einerseits eine Mitnahmepartie 41 auf, die einer Anschlagfläche 42 am Betätigungselement 31 zugeordnet ist. Die Anschlagfläche könnte prinzipiell anstelle am Betätigungselement 31 am Klinkenhebel 19 selbst angeordnet sein. Das Schwenkelement 39 ist durch eine Federkraft gemäß Pfeil 43 so beaufschlagt, dass die Mitnahmepartie 41 gegen die Anschlagfläche 42 gehalten wird. Das Schwenkelement 39 bildet andererseits eine Sperrpartie 44, die einer quer zur Anlenkachse 40 angeordneten Verriegelungsausnehmung 45 und einer seitlichen Anlagefläche 46 des Handschalters 37 zugeordnet ist. Befindet sich der Klinkenhebel 19 in seiner Ausgangsstellung (Fig. 4), ist die Sperrpartie 44 neben der senkrecht zur Zeichenebene der Fig. 4 und 5 verlaufenden seitlichen Anlagefläche 46 angeordnet. Der ebenfalls senkrecht zur Zeichenebene verlaufende Bewegungsweg des Handschalters 37 verläuft somit an der Sperrpartie 44 vorbei. Dabei liegt die zur Sperrpartie 44 hin offene Verriegelungsausnehmung 45 in der Ausschaltlage des Handschalters 37 der Sperrpartie 44 gegenüber und befindet sich somit im Schwenkweg der Sperrpartie 44.

Auf diese Weise kann die Werkzeugmaschine bei unwirksamem Klinkenhebel 19 (Fig. 4) durch Betätigen des Handschalters 37 eingeschaltet werden. Die Verriegelungsausnehmung 45 des Handschalters befindet sich dann nicht im Schwenkweg der Sperrpartie 44, so dass die Sperrpartie 44, will man den Klinkenhebel 19 betätigen, gegen die seitliche Anlagefläche 46 stößt und der Klinkenhebel 23 somit nicht verschwenkt werden kann.

Befindet sich der Handschalter 37 dagegen in seiner Ausschaltlage (Fig. 5), kann der Klinkenhebel 19 unter Eintauchen der Sperrpartie 44 in die Verriegelungsausnehmung 45 in seine Blockierstellung überführt werden. Nunmehr kann der Handschalter 37 nicht mehr bewegt werden.

Beim Ausführungsbeispiel ist das Schwenkelement 39 mehrarmig ausgebildet, wobei an einem ersten Arm 47 die Mitnahmepartie 41 und an einem zweiten Arm 48 die Sperrpartie 45 angeornet ist und an einem dritten Arm 48 die Federkraft 43 angreift.

## Patentansprüche

1. Werkzeugmaschine, insbesondere Handwerkzeugmaschine, mit einer motorisch antreibbaren Antriebswelle zum rotierenden Antreiben eines ein Werkstück bearbeitenden Bearbeitungswerkzeugs und einer von außen her zugänglichen und mittels eines Drehwerkzeugs verdrehbaren Befestigungsschraube oder einer mittels eines Drehwerkzeugs verdrehbaren, ein Gewinde aufweisenden Befestigungsmutter zum drehfesten Verbinden des Bearbeitungswerkzeugs mit der Antriebswelle, wobei der Antriebswelle eine Blockiereinrichtung zum Blockieren der Antriebswelle in dem Lösen und/oder Festziehen der Befestigungsschraube oder Befestigungsmutter entsprechender Drehrichtung zugeordnet ist, wobei die Blockiereinrichtung (16) ein drehfest mit der Antriebswelle (2) verbundenes Blockier-Zahnrad (17) und einen dem Blockier-Zahnrad (17) zugeordneten, um eine ortsfest an der Werkzeugmaschine angeordnete Schwenkachse (20) schwenkbaren, von Hand betätigbaren Klinkenhebel (19) enthält, **dadurch gekennzeichnet, dass** der Klinkenhebel (19) einarmig oder zweiarmig ist und durch Federkraft in einer außer Eingriff mit dem Blockier-Zahnrad (17) stehenden Ausgangsstellung gehalten wird und entgegen der Federkraft bei einarmigem Klinkenhebel in eine Blockierstellung und bei zweiarmigem Klinkenhebel (19) in zwei einander entgegengesetzte Blockierstellungen verschwenkbar ist, wobei das Blockier-Zahnrad (17) in jeder Blockierstellung gegen ein Verdrehen entweder in dem Lösen oder dem Festziehen der Befestigungsschraube oder Befestigungsmutter (11) entsprechender Drehrichtung blockiert ist und in entgegengesetzter Drehrichtung an dem Klinkenhebel (19) vorbeiratschen kann und wobei zwischen der Befestigungsschraube oder Befestigungsmutter (11) und der Antriebswelle (2) eine Reibungskraft wirksam ist, so dass die Antriebswelle (2) beim Verdrehen der Befestigungsschraube oder Befestigungsmutter (11) in der blockierten Drehrichtung entgegengesetzter Drehrichtung mitgenommen wird.

2. Werkzeugmaschine nach Anspruch 1, **dadurch gekennzeichnet, dass** der Klinkenhebel (19) mittels einer ersten Federeinrichtung (27,28) federnd an einem um die Schwenkachse (20) schwenkbaren Betätigungselement (31) und das Betätigungselement (31) mittels einer zweiten Federeinrichtung (29,30) federnd gegen das Maschinengehäuse (3) abgestützt ist.

3. Werkzeugmaschine nach Anspruch 2, **dadurch gekennzeichnet, dass** bei einem zweiarmigen Klinkenhebel (19) die erste und die zweite Federeinrichtung jeweils von zwei beiderseits der Schwenkachse (20) angeordneten Federn (27,28 bzw. 29,30) gebildet werden.

4. Werkzeugmaschine nach Anspruch 2 oder 3, **dadurch gekennzeichnet, dass** das Betätigungselement (31) bei einem zweiarmigen Klinkenhebel (19) nach Art einer Wippe mit zwei jeweils einem Arm (21 bzw. 22) des Klinkenhebels (19) zugeordneten Wippenarmen (34,35) ausgebildet ist.

5. Werkzeugmaschine nach einem der Ansprüche 2 bis 4, **dadurch gekennzeichnet, dass** das Betätigungselement (31) eine an der dem Blockier-Zahnrad (17) zugewandten Seite offene Ausnehmung (36) aufweist, in die der Klinkenhebel (19) eintaucht.

6. Werkzeugmaschine nach einem der Ansprüche 1 bis 5, **dadurch gekennzeichnet, dass** zwischen der Befestigungsschraube oder Befestigungsmutter (11) und der Antriebswelle (2) oder einem mit dieser verbundenen Teil ein Mitnahme-Reibring (26) angeordnet ist.

7. Werkzeugmaschine nach einem der Ansprüche 1 bis 6, mit einem Handschalter zum Ein- und Ausschalten ihres Antriebsmotors, **dadurch gekennzeichnet, dass** eine Sicherungseinrichtung (38) vorhanden ist, die bei in die Blockierstellung verschwenktem Klinkenhebel (19) zumindest dann, wenn die blockierte Drehrichtung der Rotationsrichtung des Bearbeitungswerkzeugs entspricht, den Handschalter (37) gegen ein Bewegen in seine Einschaltlage sichert und die bei in seiner Einschaltlage befindlichem Handschalter (37) den Klinkenhebel (19) gegen ein Verschwenken zumindest in die Blockierstellung verhindert, in der die blockierte Drehrichtung der Rotationsrichtung des Maschinenwerkzeugs entspricht.

8. Werkzeugmaschine nach Anspruch 7, **dadurch gekennzeichnet, dass** die Sicherungseinrichtung (38) ein um eine ortsfest am Maschinengehäuse (3) angeordnete, zur Schwenkachse (20) des Klinkenhebels (19) parallele Anlenkachse (40) schwenkbares Schwenkelement (39) enthält, das einerseits eine Mitnahmepartie (41), die einer Anschlagfläche (42) des Klinkenhebels oder des Betätigungselements (31) zugeordnet ist, und andererseits eine Sperrpartie (44), die einer Verriegelungsausnehmung (45) und einer seitlichen Anlagefläche (46) des Handschalters (37) zugeordnet ist, bildet, dass das Schwenkelement (39) federbelastet ist und durch die Federkraft mit seiner Mitnahmepartie (41) gegen die Anschlagfläche (42) des Schwenkelements (39) gehalten wird und dass der Bewegungsweg des Handschalters (37) mit der Sperrpartie (44) zugewandter Anlagefläche (46) an der Sperrpartie (44) vorbei verläuft, wobei die Verriegelungsausnehmung (45) des Handschalters (37) in der Ausschaltlage des Handschalters im Schwenkweg der Sperrpartie (44) angeordnet ist.

## Claims

1. Machine tool, in particular a hand-operated power tool, with a drive shaft able to be driven by a motor for the rotary driving of a machining tool for machining a workpiece, and a fastening bolt accessible from the outside and rotatable by means of a rotation tool, or a fastening nut with a thread, rotatable by means of a rotation tool, for the non-rotatable connection of the machining tool to the drive shaft, wherein the drive shaft is assigned an interlocking device for interlocking the drive shaft in the relevant direction of rotation for loosening and/or tightening the fastening bolt or fastening nut, wherein the interlocking device (16) contains an interlocking gear (17) connected non-rotatably to the drive shaft (2) and a ratchet lever (19) assigned to the interlocking gear (17), actuable by hand and pivotable around a pivot axis (20) located immovably on the machine tool, **characterised in that** the ratchet lever (19) is single-arm or double-arm and held by spring force in a normal position disengaged from the interlocking gear (17), and may be pivoted against the spring force in the case of the single-arm ratchet lever into one interlocking position and in the case of the double-arm ratchet lever (19) into two opposite interlocking positions, wherein the interlocking gear (17) in each interlocking position is locked in a relevant direction of rotation against either loosening or tightening the fastening bolt or fastening nut (11), and in the opposite direction of rotation is able to ratchet past the ratchet lever (19), and wherein between the fastening bolt or fastening nut (11) and the drive shaft (2) a frictional force is effective so that on rotation of the fastening bolt or fastening nut (11) in the direction of rotation opposite the locked direction of rotation, the drive shaft (2) is driven along with them.

2. Machine tool according to claim 1, **characterised in that** the ratchet lever (19) has spring support from a first spring device (27, 28) on an actuating element (31) pivotable around the pivot axis (20), and the actuating element (31) has spring support from a second spring device against the machine casing (3).

3. Machine tool according to claim 2 **characterised in that**, in the case of a double-arm ratchet lever (19), the first and second spring devices are each formed by springs (27, 28 and 29, 30 respectively) arranged either side of the pivot axis (20).

4. Machine tool according to claim 2 or 3 **characterised in that**, in the case of a double-arm ratchet lever (19), the actuating element (31) is in the form of a rocker with two rocker arms (34, 35) each assigned to an arm (21 and 22 respectively) of the ratchet lever (19).

5. Machine tool according to any of claims 2 to 4, **characterised in that** the actuating element (31) has on the side facing the interlocking gear (17) an open recess (36) into which the ratchet lever (19) dips.

6. Machine tool according to any of claims 1 to 5, **characterised in that** a driving friction ring (26) is provided between the fastening bolt or fastening nut (11) and the drive shaft (2) or a part connected to the latter.

7. Machine tool according to any of claims 1 to 6, with a manual switch for switching on and off its drive motor, **characterised in that** a locking device (38) is provided which, with the ratchet lever (19) pivoted into the interlocking position, locks the manual switch (37) against movement into its switch-on position at least when the locked direction of rotation corresponds to the direction of rotation of the machining tool and which, with the manual switch (37) in its switch-on position, prevents the ratchet lever (19) from pivoting at least into the interlocking position in which the locked direction of rotation corresponds to the direction of rotation of the machine tool.

8. Machine tool according to claim 7, **characterised in that** the locking device (38) contains a pivoting element (39) which is pivotable around a hinge axis (40) fixed immovably on the machine casing (3) parallel to the pivot axis (20) of the ratchet lever (19), and which at one end forms a driving section (41) assigned to a stop face (42) of the ratchet lever or the actuating element (31), and at the other end forms a blocking section (44) assigned to a locking recess (45) and a side contact surface (46) of the manual switch (37), that the pivoting element (39) is spring-loaded and is held by the spring force by its driving section (41) against the stop surface (42) of the pivoting element (39), and that the movement path of the manual switch (37) with the contact surface (46) facing the blocking section (44) runs past the blocking section (44), wherein the locking recess (45) of the manual switch (37) is located in the pivoting path of the blocking section (44) in the switch-off position of the manual switch.

## Revendications

1. Machine-outil, en particulier machine-outil portative, comportant un arbre d'entraînement, apte à être actionné par un moteur et entraînant en rotation un outil destiné à usiner une pièce, et une vis de fixation accessible de l'extérieur et pouvant tourner à l'aide d'un outil rotatif, ou un écrou de fixation pouvant tourner à l'aide d'un outil rotatif, muni d'un filetage et destiné à assembler l'outil à l'arbre d'entraînement, un dispositif de blocage destiné à bloquer l'arbre d'entraînement dans le sens de rotation correspondant au desserrage et/ou au serrage de la vis de fixation ou de l'écrou de fixation étant associé à l'arbre d'entraînement, ledit dispositif de blocage (16) contenant une roue dentée de blocage (17), reliée de manière solidaire en rotation avec l'arbre d'entraînement (2), et un levier à cliquet (19) actionnable manuellement, associé à la roue dentée de blocage (17), apte à pivoter autour d'un axe de pivotement (20) disposé de manière fixe sur la machine-outil, **caractérisée en ce que** le levier à cliquet (19) est à un seul bras ou à deux bras et est maintenu par la force d'un ressort dans une position initiale hors de prise avec la roue dentée de blocage (17) et est apte à pivoter à l'encontre de la force du ressort dans une position de blocage en présence d'un levier à cliquet à un seul bras et dans deux positions de blocage opposées l'une à l'autre en présence d'un levier à cliquet (19) à deux bras, la roue dentée de blocage (17) dans chaque position de blocage étant immobilisée en rotation dans le sens de rotation correspondant soit au desserrage, soit au serrage de la vis de fixation ou de l'écrou de fixation, et, dans le sens de rotation opposé, peut glisser le long du levier à cliquet (19), et une force de frottement agissant entre la vis de fixation ou l'écrou de fixation (11) et l'arbre d'entraînement (2) de telle sorte que, au moment de la rotation de la vis de fixation ou de l'écrou de fixation (11), l'arbre d'entraînement (2) est entraîné dans le sens de rotation opposé au sens de rotation bloqué.

2. Machine-outil selon la revendication 1, **caractérisée en ce que** le levier à cliquet (19) prend appui, au moyen d'un premier dispositif de ressort (27, 28), de manière flexible sur un élément d'actionnement (31) apte à pivoter autour de l'axe de pivotement (20) et l'élément d'actionnement (31) prend appui, au moyen d'un deuxième dispositif de ressort (29, 30), contre le carter (3) de la machine.

3. Machine-outil selon la revendication 2, **caractérisée en ce que**, en présence d'un levier à cliquet (19) à deux bras, le premier et le deuxième dispositif de ressort sont formés chacun par deux ressorts (27, 28 et 29, 30) disposés de part et d'autre de l'axe de pivotement (20).

4. Machine-outil selon la revendication 2 ou 3, **caractérisée en ce que** l'élément d'actionnement (31), en présence d'un levier à cliquet (19) à deux bras, est réalisé sous la forme d'une bascule avec deux bras (34, 35) associés chacun à un bras (21 ou 22) du levier à cliquet (19).

5. Machine-outil selon l'une quelconque des revendications 2 à 4, **caractérisée en ce que** l'élément d'actionnement (31) comporte un évidement (36), qui est ouvert sur le côté orienté vers la roue dentée de blocage (17) et dans lequel s'engage le levier à cliquet (19).

6. Machine-outil selon l'une quelconque des revendications 1 à 5, **caractérisée en ce qu'**une bague de frottement d'entraînement (26) est disposée entre la vis de fixation ou l'écrou de fixation (11) et l'arbre d'entraînement (2) ou une partie reliée à celui-ci.

7. Machine-outil selon l'une quelconque des revendications 1 à 6, comportant un interrupteur manuel pour la connexion ou la déconnexion de son moteur d'entraînement, **caractérisée en ce qu'**il est prévu un dispositif de sécurité (38) qui, lorsque le levier à cliquet (19) a pivoté dans la position de blocage, au moins lorsque le sens de rotation bloqué correspond au sens de rotation de l'outil, immobilise l'interrupteur manuel (37) contre tout mouvement dans sa position de connexion et qui, lorsque l'interrupteur manuel (37) est situé dans sa position de connexion, empêche le levier à cliquet (19) à pivoter au moins dans la position de blocage, dans laquelle le sens de rotation bloqué correspond au sens de rotation de la machine-outil.

8. Machine-outil selon la revendication 7, **caractérisée en ce que** le dispositif de sécurité (38) contient un élément pivotant (39), qui peut pivoter autour d'un axe d'articulation (40), disposé de manière fixe sur le carter (3) de la machine et parallèle à l'axe de pivotement (20) du levier à cliquet (19), et qui forme, d'une part, une partie d'entraînement (41), qui est associée à une surface de butée (42) du levier à cliquet ou de l'élément d'actionnement (31), et, d'autre part, une partie de blocage (44), qui est associée à un évidement de verrouillage (45) et à une surface d'appui (46) latérale de l'interrupteur manuel (37), **en ce que** l'élément pivotant (39) est sollicité par un ressort et, sous l'effet de la force du ressort, est maintenu avec sa partie d'entraînement (41) contre la surface de butée (42) de l'élément pivotant (39), et **en ce que** la trajectoire de mouvement de l'interrupteur manuel (37) avec la surface d'appui (46) orientée vers la partie de blocage (44) passe le long de la partie de blocage (44), l'évidement de verrouillage (45) de l'interrupteur manuel (37) étant disposé dans la trajectoire de pivotement de la partie de blocage (44) lorsque l'interrupteur manuel est dans la position de déconnexion.
